# EUROPEAN PATENT APPLICATION

(11) **EP 3 059 747 A1**
(43) Date of publication of application: **24.08.2016**
(21) Application number: 13895691.7
(22) Date of filing: 02.12.2013
(51) Int. Cl.: H01G 4/32

(54) **POWER CAPACITOR AND MANUFACTURING METHOD THEREOF**

(30) Priority: 14.10.2013 CN 201310479856
(71) Applicant: Chint Electric Co. Ltd., Songjiang, Shanghai 201614 (CN)
(72) Inventor: ZHANG, Yashu, Shanghai 201614 (CN); WANG, Ninglai, Shanghai 201614 (CN); ZHOU, Cunhe, Shanghai 201614 (CN); WANG, Bo, Shanghai 201614 (CN); DING, Peng, Shanghai 201614 (CN)
(74) Representative: Petraz, Gilberto Luigi
(86) International application number: PCT/CN2013/088289
(87) International publication number: WO 2015/054949

(57) **Abstract**

A power capacitor and a manufacturing method thereof are disclosed. The power capacitor comprises a core installed in major insulation and at least two terminals connected with an external circuit. The core comprises a plurality of welding components mutually overlapped together, each of which comprises a plurality of capacitive elements. Each capacitive element is wound by two aluminum foils and two sets of thin films. Two aluminum foils of each capacitive element are provided with two electrodes extending in opposite directions respectively from the edges of the thin film, and the size a of each electrode is 10mm to 15mm. Various capacitive elements inside each welding component are electrically connected through a first batch of multilayer jointly-welded ultrasonic welding structures. Various welding components are electrically connected through a second batch of multilayer jointly-welded ultrasonic welding structures. Two welding components located at the upper end and at the lower end of the core are electrically connected with the terminals through multilayer jointly-welded cold mechanical clamping structures respectively. By adopting the power capacitor and the manufacturing method thereof, the size of the electrode can be reduced by 50% to 60%, and the capacitance of the capacitive element can be increased by 6% to 10%.

## Description

### Technical Field

The present invention belongs to the manufacturing field of a power capacitor, relates to the power capacitor and a manufacturing method thereof, and more particularly, to a new scheme for the whole electrical connection processing of capacitive elements, components and a core therein.

### Background Art

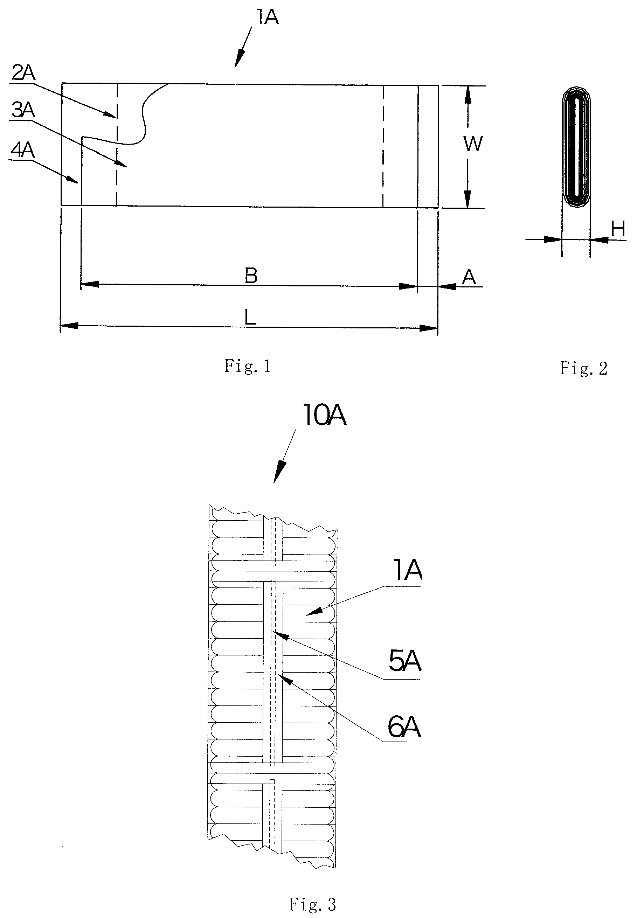

Power capacitors are widely used in power systems, high-voltage tests, laser technology, high-energy physics, industrial and agricultural production and daily life are also widely used. Fig. 1 to Fig. 3 show a basic structure of an existing power capacitor, including a core 10A assembled by a plurality of capacitive elements 1A as shown in Fig. 3. See Fig. 1 and Fig. 2, each capacitive element 1A is provided with a length L, a width W and a thickness H. The capacitive element 1A is overlapped and wound by two aluminum foils 2A and two sets of thin films 3A (bear storage function). Each set of thin film is composed of two to three insulating medium. The edge of each aluminum foil 2A includes an edge strip with the size of A, and the extending directions of the edge strips of the two aluminum foils 2A from the edge of the thin film 3A along the direction of the length L are opposite. As a result, the two edge strips extending from the opposite directions of the edge of the thin film 3A form two electrodes 4A of each capacitive element 1A, that is, the size A of the edge strip is also the size of the electrode 4A. During the course of manufacturing, the electrodes 4A of various capacitive elements 1A as well as the terminal of the respective capacitive elements and the leading-out of the core 10A are all electrically connected. Over the nearly 30 years since the advent of an all-film power capacitor, there are three electrical connection modes of the power capacitor in the manufacturing industry of the thin-film capacitor around the world, including a brazing solder mode (the oldest mode), a cold mechanical clamping mode, and a mode of combining cold welding with cold mechanical clamping. Respective features and limitations of three existing modes are briefly summarized as follows:
The brazing solder mode, which is still continuously used in the majority of production enterprises, usually employs the structure of a connecting piece 5A as shown in Fig. 3. Through such brazing solder mode, the brazing is performed by means of a tin-lead solder, the melting point of which is below the aluminum foil, a copper strip, fuses and other base material s, at a temperature lower than the melting point of the base material and higher than the melting point of tin-lead solder. Required through heat, and then the liquid tin-lead solder is moistened and spread out on the surface of the base material as well as caulked the gap in the base material ,the specific connection structure shown in Fig. 3. Brazed need to be carried out after the capacitor elements 1A assembled into the core 10A capacitive element. The electrodes of various capacitive elements 1A need to be welded on the connecting piece 5A through the brazing one by one. A very large tin-lead solder layer 6A needs to be spread out and filled between the electrode and the connecting piece 5A, and the process of electrical connection needs to be performed after the core is assembled. The major problem of the brazing solder mode is that it is difficult to ensure the welding quality. As the brazing between the electrode and the connecting piece 5A needs to be heated up and finished via manual operation, the heating temperature is controlled by an operator by experiences. If the temperature is too low, fault soldering is caused, the contact resistance is increased and the product life is affected; while if the temperature is too high, the insulation medium is damaged to result in aging and bonding the film, which affects the electrical performance of the product. Since the connecting piece 5A needs to be subject for lining tin processing before brazing and tinning process need to use special enameled tin and temperature control equipment, and the price of tin-lead solder is more expensive, resulting in high production costs.. In addition, the brazing solder mode pollutes the environment and affects the employee health.

The cold mechanical clamping mode performs the electrical connection between the electrodes of the element via the special clamping piece and tool. As the length of the element electrode extending out the thin film must be longer than the brazing, the cold mechanical clamping technology is unable to be implemented under the circumstance that the size A of the electrode is less than 15mm, the perfect clamping effect is difficultly acquired under the circumstance that the size A of the electrode is less than 20mm. Therefore, the size A of the electrode of the aluminum foil needs to be increased, but the cost of the aluminum foil is higher. In addition, the investment cost of the clamping and detecting device is higher, the clamping technology is complicated in operation, and the manufacturing efficiency is lower than the brazing solder mode.

The combined mode of cold welding and cold mechanical clamping performs the electrical connection between the electrodes of the element in a cold welding manner, and performs the electrical connection of the terminal of the core in a cold mechanical clamping mode. As the welding mode needs to apply a certain static pressure on the work piece, the size of the welding head of the welding device cannot be made too small due to the limitation of the intensity. In this way, the size A of the electrode of the aluminum foil must be at least lengthened to 25mm (1 inch), which firstly increases the cost of the material. At the same time, the thickness H of the capacitive element further needs to be at least increased to 20mm. However, the increase in the thickness H reduces the parallel number of the capacitive elements. When the thickness H is greater than or equal to 20mm, the parallel number of the capacitive elements is less than or equal to 14, which eliminates the operation possibility of producing the capacitor with the internal fuse. In addition, the higher investment cost of the clamping, welding and detecting device is also the disadvantage of the mode.

For the above existing three electrical connection modes, the size A of the electrode needs to be increased and the step of the electrical connection process is totally limited after assembling as the core, but the electrical connection after assembling as the core only employs the manual connection. In this way, the quality of the electrical connection is undesirable, and the production efficiency is low and the cost is higher. However, as the electrical connection has a very sensitive influence on the electrical performance and the quality stability of the power capacity and relates to the complicated processing technique, the above manufacturing method of the power capacitor is still used today. Particularly, no great progress is made in the aspect of the electrical connection structure of the capacitive element inside the capacitor, which is in discrepancy with that the rapid development of the capacity is caused by following the improvement of the related materials.

### Summary of the Invention

In order to break through the bottleneck of the prior art, the object of the present invention is to provide a power capacitor and a manufacturing method thereof, which not only effectively optimizes the quality of the electrical connection, improves production efficiency, and can significantly reduce the manufacturing cost of the product, but also avoids environmental pollution and health hazards to the employees, and can better meet the structural requirements of multi-element within the fuse capacitor.

In order to achieve the above object, the technical scheme of the invention is as follows:
A power capacitor includes major insulation 70 installed in housing, a core 10 installed in the major insulation 70 and at least two terminals 71 and 72 connected with an external circuit, wherein the core 10 includes a plurality of welding components 13, 14, 15 mutually overlapped together, each of welding components 13, 14, 15 includes a plurality of capacitive elements 1, each capacitive element 1 is wound by two aluminum foils 2 and two sets of thin films 3, two aluminum foils 2 of each capacitive element 1 are provided with two electrodes 4 extending from the opposite direction of the edges of the thin film 3 respectively, and the size a of each electrode 4 is 100mm to 15mm; various capacitive elements 1 inside each of welding components 13, 14, 15 are electrically connected through a first batch of multilayer jointly-welded ultrasonic welding structures 11, various welding components 13, 14, 15 are electrically connected through a second batch of multilayer jointly-welded ultrasonic welding structures 11, two welding components 13 and 15 located at the upper end and the lower end of the core 10 are electrically connected with the terminals 71 or 72 through multilayer jointly-welded cold mechanical clamping structures 12 respectively.

Preferably, the multilayer jointly-welded ultrasonic welding structures 11 are jointly-welded double-pole full-layer composite structures 111 with a protection sheet 16 or jointly-welded double-pole full-layer simple structures without a protection sheet, and the setting portion of the jointly-welded double-pole full-layer composite structures 111 or the jointly-welded double-pole full-layer simple structures is on two adjacent electrical connection parts 41 and 42 of two adjacent electrodes 4 of two adjacent capacitive elements 1.

Preferably, the multilayer jointly-welded ultrasonic welding structures 11 are jointly-welded single-pole full-layer composite structures 112 with a protection sheet 16 or jointly-welded single-pole full-layer simple structures without a protection sheet, and the setting portion of the jointly-welded single-pole full-layer composite structures 112 or the jointly-welded single-pole full-layer simple structures is on the same electrical connection part 41 or 42 of the same electrode 4 of the same capacitive element 1.

Preferably, the cold mechanical clamping structure 12 includes a before gripping structure and a jointing clamp 7, the before gripping structure is established on the connection parts 41 and 42 of that electrode 4 for leading out the electrical connection in two welding components 13 and 15 at the upper end and the lower end of the core 10, the jointing clamp 7 is arranged on the terminal 71 or 72, and the jointing clamp 7 and the before gripping structure are subject to cold mechanical clamping.

Further, the before gripping structure is a multilayer close-fitting contact structure established on the connection part 41 or 42 of the electrode (4); or the before gripping structure is a multilayer jointly-welded ultrasonic welding structure established on the connection part 41 or 42 of said electrode (4). Preferably, the size a of the electrode 4 is preferably 12mm.

Preferably, welding spots 110 of the multilayer jointly-welded ultrasonic welding structures 11 take the shape of a netted rectangle.

Preferably, the multilayer jointly-welded ultrasonic welding structures 11 are bent toward the direction of the thickness H of the capacitive element 1.

A manufacturing method of a power capacitor according to the invention includes the following steps of:
step I: manufacturing a plurality of capacitive elements 1 with the same specifications, wherein each capacitive element 1 is wound by two aluminum foils 2 and two sets of thin films 3, two electrodes 4 are extended from the edges of two sides of each capacitive element 1 respectively, and the size a of each electrode 4 is 10mm to 15mm;
step II: performing ultrasonic welding for the electrodes 4 of pre-seted number of the plurality of capacitive elements 1 in a stress-free state through an ultrasonic welding device successively to realize the electrical connection between the electrodes 4 of each capacitive element 1, and overlapping and assembling the plurality of capacitive elements 1 together to form a plurality of welding components 13, 14, 15 respectively, establishing a first batch of multilayer jointly-welded ultrasonic welding structures 11 on each welding component through the ultrasonic welding device to establish a fixed connection relation among various capacitive elements 1 in the same welding component, and realizing the electrical connection between the electrodes 4 of various capacitive elements 1 in the same welding component at the same time;
step III: fixedly connecting among various welding components 13, 14, 15 and then pressing and assembling as a core 10 according to design requirements;
step IV: performing the ultrasonic welding for the pressed core 10 through an ultrasonic welding tool, and establishing a second batch of multilayer jointly-welded ultrasonic welding structures 11 among various welding components 13, 14, 15 formed as the core 10 to achieve the electrical connection among each adjacently overlapped and assembled welding components 13, 14, 15; and
step V: firstly establishing a before gripping structure for the electrode 4 lead out from the outermost side of the welding components 13 and 15 at the upper end and the lower end of the core 10 respectively, and then clamping a wiring clamp 7 on the terminals 71 and 72 of the capacitor and the before gripping structure through a hand-held mechanical clamping tool respectively to form a cold mechanical clamping structure 12 at each terminal of the capacitor.

Further, the step V further includes a sub-step of bending and arranging the ultrasonic multilayer jointly-welded ultrasonic welding structures 11 and the cold welding structure 12, and then fixedly installing the core 10 in housing.

A technique of first welding and then pressing and assembling is employed in the present invention against the current situation of the big size of a welding head and the inconvenient operation after the elements are pressed and assembled as the core. Before pressing and assembling the core, the multiple capacitive elements are firstly subject to the cold welding in the stress-free state via a table type ultrasonic welding machine in sequence. Particularly, the multilayer aluminum foils at the same electrode of the adjacent elements are welded together through an ultrasonic welding technology to form a jointly-welded double-pole full-layer ultrasonic connecting structure, and then a parallel section capacity component structure is assembled and formed. Then, the plurality of parallel section capacity component structures are overlapped according to the design requirements and pressed and assembled as the core, and then connected in series via the ultrasonic welding machine. At last, the leading-out line are subject to the cold mechanical clamping. Tests prove that the extending size of the electrode of the capacitive element of the capacitor produced by the method of the prevent invention is reduced to 12mm from 25.4mm, which may reduce the electrode size of each capacitive element by 50% to 60%. The thickness of the capacitive element is not limited. Further, under the context of using the same size series of aluminum foil commodity, the capacitance of the capacitive element may be increased by 6% to 10%, the material cost is effectively reduced, the manufacturing difficulty of the assembling core is simplified, and the number of the elements is not limited any more. In this way, the electrical performance of the product, the product process and the quality control reach the best comprehensive state, and the whole electrical performance of the power capacitor and the reliability and the economy of the product are remarkably improved.

### Brief Description of the Drawings

Fig. 1 is a profile structural diagram of a capacitive element 1A of a power capacitor in the prior art.
Fig. 2 is a left side view of Fig. 1, which schematically shows the capacitive element 1A in the prior art is a structure that is overlapped and wound by two aluminum foils 2A and two sets of thin films 3A.
Fig. 2 is a profile structural diagram of a core 10A of the power capacity in the prior art. The electrical connection adopts a tin-lead brazing solder mode. Electrodes 4A of the capacitive element 1A is welded to the connecting piece 5A through brazing one by one. A large and thick solder layer 6A is established by spreading over tin-zinc solder, spreading out and filling tin-lead solder and the like between the electrodes 4A and the connecting piece 5A.

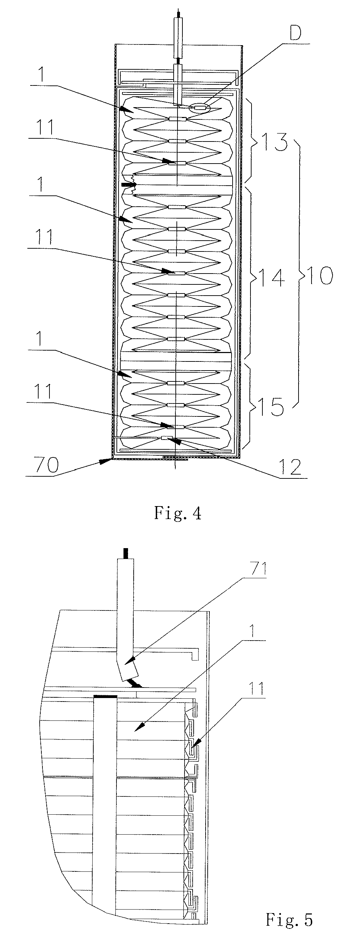

Fig. 4 is a planar structural diagram of the power capacitor according to the invention.
Fig. 5 is a locally amplified diagram of a left side view in Fig. 4.

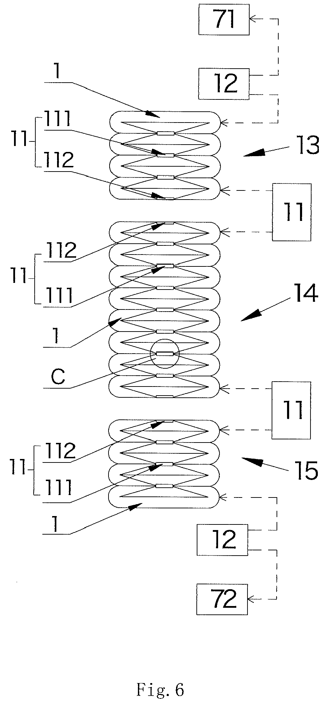

Fig. 6 is a planar structural diagram of the capacitor shown in Fig. 4 by assembling through a welding component 13, a welding component 14 and a welding component 15.

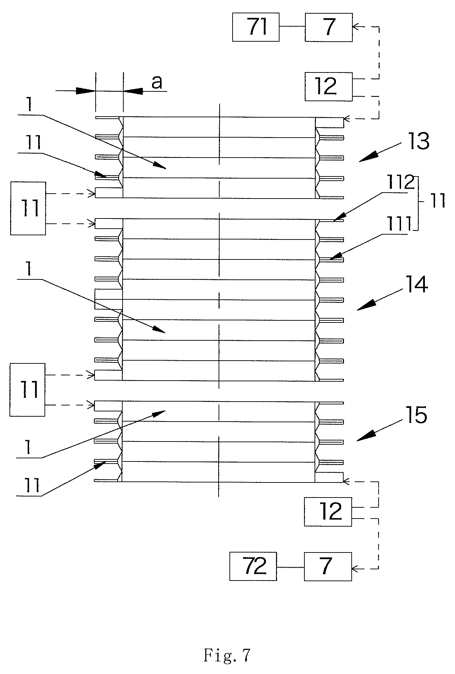

Fig. 7 is a left side view of Fig. 6.

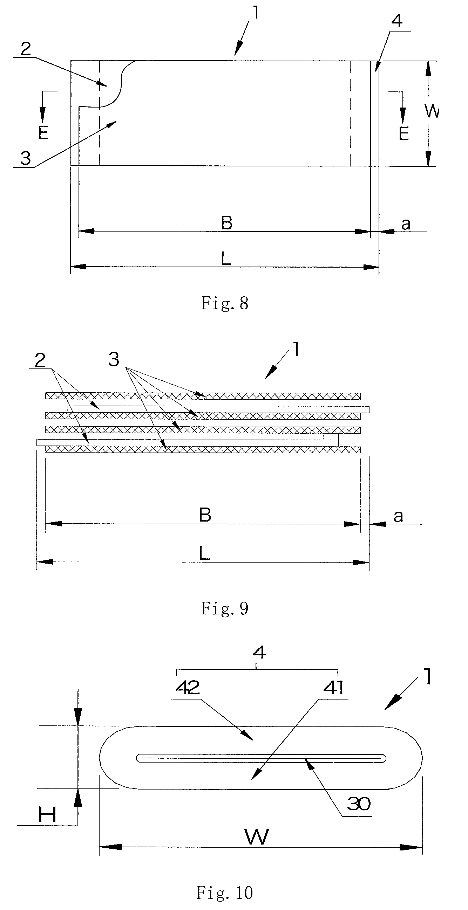

Fig. 8 is a structural diagram of a capacitive element 1 of the capacitor shown in Fig. 4.
Fig. 9 is an E-E sectional view of Fig. 8 and shows the specific structure of the capacitive element 1.
Fig. 10 is an amplified diagram after rotating the left side view of Fig. 8 at 90° downward.

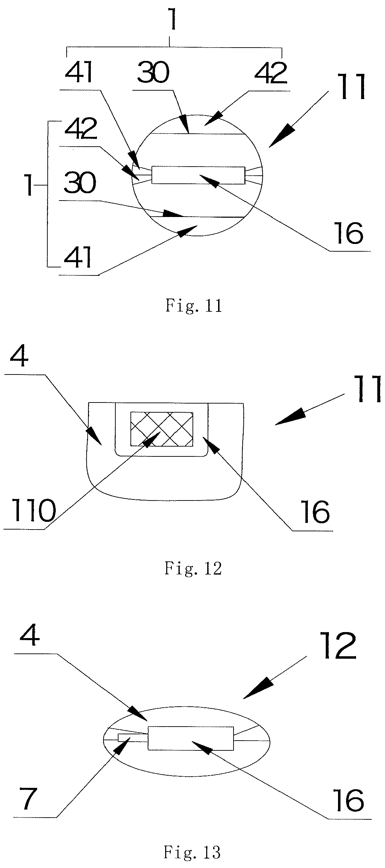

Fig. 11 is a locally amplified diagram of C in Fig. 6.
Fig. 12 is a vertical view of Fig. 11.
Fig. 13 is a locally amplified diagram of D in Fig. 4.

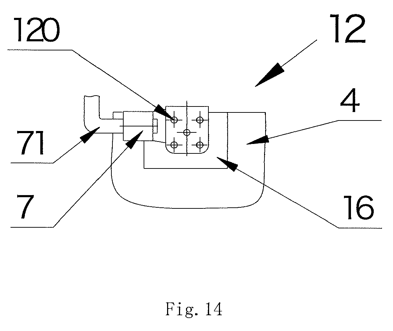

Fig. 14 is a vertical view of Fig. 13.

### Detailed Description of the Preferred Embodiments

The detailed description of the preferred embodiments of the power capacitor of the present invention is further described with reference to the embodiments given in Fig. 4 to Fig. 14 hereinafter. The power capacitor of the present invention is not limited to the description of the following embodiments.

In figures, Fig. 4 is a planar structural diagram of the power capacitor of the present invention, which shows the profile and inside structure of the embodiment of the capacitor from an angle. Fig. 5 is a locally amplified diagram of the left side view of Fig. 4, which shows the profile and inside structure of the embodiment of the capacitor from another angle. Fig. 6 is a planar structural diagram of the capacitor shown in Fig. 4 by assembling through the welding component 13, the welding component 14 and the welding component 15 that have been formed by the first batch of ultrasonic welding process before assembling as the core 10. Fig. 7 is a left side view of Fig. 6. Fig. 8 is a structural diagram of the capacitive element 1 of the capacitor shown in Fig. 4. Compared with the large-size electrode 4A shown in Fig. 1, the size A of the electrode 4A is greater than 20mm, while the electrode 4 shown in Fig. 8 is a small-size electrode, the size a of which is 10mm to 15mm. Fig. 9 is an E-E sectional view of Fig. 8 and shows the specific structure of the capacitive element 1 overlapped and wound by two aluminum foils 2 and two sets of thin films 3. Each set of thin films 3 shown in figure includes two thin films. Only one wound layer is shown in Figure, but there are multiple wound layers. In order to conveniently show the structure of the capacitive element 1, the distance between the wound aluminum foil 2 and the thin film 3 shown in Fig. 9 and the thickness of the aluminum foil 2 and the thin film 3 are amplified, wherein the layer number of the wound aluminum foil 2A and the thin film 3A is 1 set schematically, and the actual layer number shall be determined according to the design demands. Fig. 10 is an amplified diagram after rotating the left side view of Fig. 8 at 90° downward. Fig. 11 is a locally amplified diagram of C in Fig. 6. Fig. 11 shows a profile of a jointly-welded double-pole full-layer composite structure 111 with a protection sheet 16 of the multilayer jointly-welded ultrasonic welding structure 11. Fig. 12 is a vertical view of Fig. 11, which shows the profile structure of the jointly-welded double-pole full-layer composite structure 111 from another angle. Fig. 12 still shows the shape of the welding spots of the ultrasonic welding structure 11. Fig. 13 is a locally amplified diagram of D in Fig. 4 and shows the profile structure of a cold clamping structure 12. Fig. 14 is a vertical view of Fig. 13 and shows the profile structure of the cold clamping structure 12 from another angle.

See Fig. 4, the power capacitor of the present invention includes major insulation 70, a core 10 installed in the major insulation 70 and two terminals 71 and 72 electrically connecting from the electrical connection part of the capacitive elements at the upmost layer and the lowest layer of the core 10 (see Fig. 6 and Fig. 7). Two terminals 71 and 72 are two poles electrically connecting with the power capacitor and the external circuit respectively. The external end of the terminal 71 or 72 is finally connected with an insulator (without being shown in figure) on the top cover of the capacitor (without being shown in figure) to form two externally-connected electrodes for connecting with an external circuit of power network (Fig. 4). The internal end of the terminal 71 or 72 is connected with a wiring clamp 7 (Fig. 14), or in other word, the wiring clamp 7 is arranged at the internal end of the terminal 71 or 72. In the embodiment shown in Fig. 4, the core 10 includes 3 welding components 13, 14, 15 longitudinally stacked and assembled in the major insulation 70. The welding component 15 is distributed on the lower layer, the welding component 14 is distributed on the middle layer, and the welding component 13 is distributed on the upper layer. The upper layer of welding component 13 and the lower layer of welding component 15 are electrically connected with the wiring clamps 7 of the two terminals 71 and 72 respectively, as well as are electrically connected with the middle layer of welding component 14 respectively at the same time. Moreover, these electrical connections may be in serial connection or parallel connection according to the design requirements. For instance, the electrical connection among the welding components 13, 14, 15 of the embodiment given in Fig. 4 is serial connection, but the number of welding components may be 2 or more than 3. For instance, if there are 2 welding components according to the design requirements, the middle layer of welding component 14 is not provided; while if there are 4 or more welding components according to the design requirements, there are 2 or more middle layers of welding components 14. Thus it can be seen that although there are several welding components set, the upper layer of welding component 13 and the lower layer of welding component 15 are necessary. According to the parameter requirements of the capacitor, the core may be formed by different elements and different series-parallel combinations, the serial or parallel form among the welding components may also be determined according to the specific design requirements. However, no matter whether serial connection or parallel connection is provided, the electrical connection between two adjacent welding components may be realized according to the present invention and no such conductive parts as connecting piece are needed.

With the development of commercial production of aluminum foils and thin films, the aluminum foils and thin film commodities form size serialization, so that the length L of the capacitive element also shows trend serialization. This is because the intrinsic width dimension of the aluminum foils and thin film commodities is utilized, which not only is beneficial to ensuing the electrical performance of the capacitive elements, but also may avoid wasting the expensive materials of aluminum foils and thin films to save the complicated cutting process. It can be seen from the configuration of the existing capacitive element 1A shown in Fig. 1, the length L is equal to the width B of the thin film plus with the twice of the size A of the electrodes, but the size A of the electrode may not contribute to the capacitance. Therefore, during the course of manufacturing the capacitive element 1A by employing the series size of aluminum foils and thin film commodity, the capacitive element 1A remains the length L unchanged and increases the capacitance at the same time by reducing the size A of the electrode, which is the effective means to reduce the production cost and increase the additional value of the product according to the tests. Particularly, the power capacitor product with small volume, large capacitance and high quality is manufactured by making full use of the standardization of international market, the serialization of aluminum foils and thin film commodities and the size serialization of commodities in regions where the manufacturing technologies of aluminum foils and thin films are undeveloped, which is very important to speed up the development of the technology and industry of the power capacitor. Specific description is made with reference to Fig. 6 to Fig. 10 hereinafter.

Fig. 6 and Fig. 7 show each welding component 13, 14 or 15 includes the plurality of capacitive elements 1 with different numbers. Each capacitive element 1 is wound by two aluminum foils 2 and two sets of thin films 3, wherein the aluminum foils 2 are electrical connecting layer of the capacitive element 1 acting the function of electrode, and the thin films 3 are insulation medium layer of the capacitive element 1. Fig. 8 to Fig. 10 show two aluminum foils 2 of the capacitive element 1 are provided with a very narrow edge strip extending out the edge of the thin film 3 from the opposite direction respectively, the edge strip forms the electrode 4 of the capacitive element 1. After the aluminum foils 2 and the two sets of thin films 3 are wound multiple turns, the edge strip are wound the same turns. Therefore, the electrode 4 formed by the edge strip wound multiple turns is formed by multiple layers of edge strips of the aluminum foils 2 in fact, and there is no insulation medium between two adjacent layers of edge strips (Fig. 10). The flattened shape of the wound capacitive element 1 is as shown in Fig. 10. The same electrode 4 of the capacitive element 1 is divided into two electrical connection parts 41 and 42 with the same size by a center layer 30 of the thin film 3. Both the electrical connection portions 41 and 42 are folded respectively by multiple layers of edge strips of the same electrode 4 The layer number of the edge strip of each electrical connection part 41 or 42 is equal to the winding turn number of the wound capacitive element 1, which is used for providing the electrical connection between the layers of the same capacitive element 1 and the electrical connection part of the other capacitive elements 1 or the wiring clamp 7. Fig. 8 shows the size a of the electrode 4 of each aluminum foil 2 is 10mm to 15mm, preferably 12mm. The size a of the electrode 4 is the minimum of the existing cold welding and/or cold mechanical clamping electrical connection. By taking the situation that the size a is preferably 12mm for example, the size a of the electrode 4 of the present invention is reduced by 52% compared to the size A (25mm) of the electrode of the cold welding mode in the prior art. By taking the situation that the size a is preferably 12mm and the length L of the element is 350mm for example, the capacitance of the capacitive element 1 of the present invention is increased by 8.6% compared to the cold mechanical clamping mode in the prior art.

The new manufacturing method of the power capacity and the new structure of electrical connection of the present invention described hereinafter are employed to minimize the size a of the electrode 4. Fig. 4 shows various capacitive elements 1 forming each welding component 13, 14 or 15 are subject to the electrical connection by the first batch of multilayer jointly-welded ultrasonic welding structures 11, and then various welding components 13, 14, 15 are subject to the electrical connection by the second batch of multilayer jointly-welded ultrasonic welding structure 11. The so-called first batch means the multilayer jointly-welded ultrasonic welding structures 11 formed in the process before pressing and assembling the core 10, while the second batch means the multilayer jointly-welded ultrasonic welding structures 11 formed in the process after pressing and assembling the core 10. The structure form of the first batch of multilayer jointly-welded ultrasonic welding structures 11 is not different from the second batch of multilayer jointly-welded ultrasonic welding structures 11, but the connection quality, the welding efficiency and the aspect must be distinguished as the formed process, the manufacturing object and the use equipment are different. The first batch of multilayer jointly-welded ultrasonic welding structures 11 is realized by the ultrasonic welding device, with the advantages capable of making full use of the quality control environment and automation production condition provided by the device to further improve the level of the welding quality and greatly improve the degree of automation production. The second batch of multilayer jointly-welded ultrasonic welding structures 11 is realized on the ultrasonic welding tool, with the advantages capable of finishing the welding that is not realized by the existing cold welding machine device, but with the disadvantages that the control of the welding quality relies on people, which affects the production efficiency. In addition, the first batch of multilayer jointly-welded is a link which has both the link of realizing the ultrasonic welding structure 11 and the link of assembling each welding component 13, 14 or 15 by multiple capacitive elements 1. The vast majority of electrical connection is finished on the ultrasonic welding machine capable of realizing the multilayer jointly-welding ahead of schedule through the manufacturing method of firstly welding before pressing and assembling and the structure form of forming the welding components via the link, which can effectively address the problem of directly restricting the development of high-end products and limiting the improvement of the product's economic performance. The advantages are as follows: the cold welding does not damage to the insulation medium; the welding material is not melted and does not weaken the metallic character; the welding spot has well electrical conductivity, the connecting resistance is extremely low, and the additionally electrical loss is close to zero; the requirement for the welded metal surface is low, oxidization or electroplating does not affect welding; the welding cycle is short, any flux, weld-aid gas and solder is not needed; there is no high-temperature heat source for welding, there is no pollution, and it is environmentally-friendly and safe; particularly, the manufacturing difficulty of the assembling core is simplified, the number of the capacitive element is not limited, and the production demand of the internal fuse power capacitor may be further met.

The above-mentioned multilayer jointly-welding represents the important structural feature of the ultrasonic welding structure 11. "Multilayer jointly-welding" refers to a welding structure that will not be separated automatically and by which the multilayer edge strips of the aluminum foils, i.e., the electrodes 4 are jointly welded together, and various layers of edge strips may also be kept compact and firm connection amid no pressure. Therefore, one of the basic functions of the multilayer jointly-welded structural feature is to ensure the well electrical connection performance so that the connecting resistance reaches the extremely low degree (close to zero).The second basic function of the multilayer jointly-welded structural feature is to ensure the well mechanical connection performance so that the multiple capacitive elements 1 in the same welding component 13, 14 or 15 are not loosened and separated, and the welding quality of the first batch is not affected due to the subsequent process of pressing and assembling as the core. The multilayer jointly-welding of the present invention includes two specific forms, one of which is a full-layer jointly-welding form and the other of which is a non-full-layer jointly-welding form. "Full-layer jointly-welding" means the form that all edge strips of one electrical connection part 41 or 42 of the electrode 4 are welded together; while "non-full-layer jointly-welding" means the form that part of edge strips of one electrical connection part 41 or 42 of the electrode 4 is jointly welded together. Wherein, the full-layer jointly-welding form is preferable because all edge strips of the electrode 4 take part in carrying current. In this way, the conductivity of the electrode 4 may be increased to the greatest extent, and the temperature rise of a conductor will be reduced by a balanced carrying current of each edge strip at the same time. In contrast, the edge strips that are not jointly welded amid the layer losing of the non-full-layer jointly-welding may cause some disadvantages, for example, bringing about difficulty to the subsequent arrangement. According to the situation whether the protection sheet 16 is provided, the ultrasonic welding structure 11 may include two specific structure forms, one of which is a composite structure form and the other of which is a simple structure form. Fig. 11 and Fig. 12 show the composite structure form includes a protection sheet 16. The protection sheet 16 covers the outside of all edge strips of the electrical connection part 41 or 42 of the electrode 4 to form a full-layer jointly-welded composite structure with the protection sheet 16 through the ultrasonic welding, wherein the protection sheet 16 is welded with all edge strips together. The composite structure form cannot only further enhance the connection intensity of the ultrasonic welding structure 11, but also prevent the ultrasonic welding structure 11 from being damaged. If there is no protection sheet 16 provided, the full-layer jointly-welded simple structure form is formed. According to different requirements of the electrical connection, the ultrasonic welding structure 11 may further be divided into two basic forms, one of which is double-pole form, that is to say, the ultrasonic welding structure 11 has a function of the electrical connection between two adjacent electrodes 4; and the other of which is a single-pole form without the a function of the electrical connection between two electrodes 4. It is thus clear that the multilayer jointly-welded ultrasonic welding structure 11 may have multiple specific forms, wherein the most useful form of the multilayer jointly-welded ultrasonic welding structure 11 includes the following four types: the first is the jointly-welded double-pole full-layer composite structure 111 with the protection sheet 16; the second is the jointly-welded single-pole full-layer composite structure 112 with the protection sheet 16; the third is the jointly-welded double-pole fully-layer simple structure without the protection sheet 16; and the fourth is the jointly-welded single-pole fully-layer simple structure without the protection sheet 16. The specific application of these four forms is described as follows:

Fig. 11 and Fig. 12 show, the jointly-welded double-pole full-layer composite structure 111 with the protection sheet 16 has a function of the electrical connection between two adjacent electrodes 4. The protection sheet 16 covers the outside of all edge strips of the electrical connection part 41 or 42 of two adjacent electrodes 4. The protection sheet 16 is welded with all edge strips of two electrical connection parts 41 and 42 together through the ultrasonic welding. Such structure 111 is used mostly on the internal electrical connection of the welding component 13, 14 or 15 (see Fig. 6 and Fig. 7). The only difference between the third jointly-welded double-pole full-layer simple structure without the protection sheet (without being shown in figure) and the first jointly-welded double-pole full-layer composite structure with the protection sheet is that the third is not provided with the protection sheet 16. The third jointly-welded double-pole full-layer simple structure without the protection sheet may also meet the better use requirement under the context of not needing very high connection intensity and protection requirement. Fig. 6 and Fig. 7 show jointly-welded single-pole full-layer composite structure 112 with the protection sheet 16 does not have the function of electrical connection between two adjacent electrodes 4. The protection sheet 16 covers the outside of all edge strips of the electrical connection part 41 or 42 of the electrode 4. The protection sheet 16 is welded with all edge strips of the electrical connection part 41 or 42 together through the ultrasonic welding. It is mainly used cooperatively during the course of forming the cold mechanical clamping structure 12. In order to facilitate the subsequent arrangement to further improve the product performance, it may also be used for the electrical connection portion 41 or 42 without the requirements for the electrical connection. The only difference between the jointly-welded single-pole fully-layer simple structure without the protection sheet (without being shown in figure) and the jointly-welded single-pole full-layer composite structure with the protection sheet is that the fourth is not provided with the protection sheet 16. The fourth is more suitable for the electrical connection part 41 or 42 without the requirements for the electrical connection, facilitating the subsequent arrangement.

See Fig. 4, Fig. 6, Fig. 7, Fig. 13 and Fig. 14, the upper welding component 13 or the lower welding component 15 and the terminal 71 or 72 of the core 10 are electrically connected by the cold mechanical clamping structure 12, that is to say, the upper layer of welding component 13 and the terminal 71 are connected by the cold mechanical clamping structure 12, and then the lower layer of welding component 15 and the terminal 72 are connected by the cold mechanical clamping structure 12. The cold mechanical clamping structure 12 here includes a jointing clamp 7 arranged on the terminal 71 or 72 and a before gripping structure arranged on the electrode 4 (without being marked in figure). The before gripping structure is established on the connection parts 41 and 42 of the electrode 4 for leading out the electrical connection in two welding components 13 and 15 at the upper end and the lower end of the core 10, and the jointing clamp 7 and the before gripping structure are subject to cold mechanical clamping. The before gripping structure includes two forms, one of which is a multilayer close-fitting contact structure established on the on the connection part 41 or 42 of the electrode 4, which is closely contacted in a multilayer manner under the function of the external pressure but not welded, with the advantage of simple structure; the other of which is a multilayer jointly-welded ultrasonic welding structure established on the connection part 41 or 42 of the electrode 4. The specific form is one of the jointly-welded single-pole full-layer composite structure 112 or jointly-welded single-pole full-layer simple structure, as well as the same as the first batch and the second batch of multilayer jointly-welded ultrasonic welding structures 11 in the structure form, but the connection part is different for realizing the electrical connection between the connection part 41 or 42 located at the outermost side of the electrode 4 located at the uppermost layer or the lowest layer of the capacitive element 1 of the core 10 and the wiring clamp 7. The electrode 4 refers to the electrode 4 for leading out the electrical connection in the welding component 13 or 15. One perfect structure solution of the cold mechanical clamping structure 12 is the multilayer jointly-welded cold clamping structure, that is, the multilayer jointly-welded before gripping structure, preferably, the jointly-welded single-pole full-layer composite structure 112 with the protection sheet 16. The wiring clamp 7 acts the electrode leading-out function of the capacitor. The wiring clamp 7 and the jointly-welded single-pole full-layer composite structure 112 electrically connecting the external electrode are subject to the cold mechanical clamping, which may further improve the conductivity or the connection intensity. The cold mechanical clamping here is realized by a mechanical clamping force. The wiring clamp 7 may be attached with both a device applying the clamping force and also may be added with a clamp applying the clamping force (without being shown in figure). The other implementation manner of the multilayer jointly-welded before gripping structure is that the jointly-welded single-pole full-layer simple structure without the protection sheet 16 and the wiring clamp 7 are subject to the cold mechanical clamping form. The connection intensity of such form is worse than the jointly-welded single-pole full-layer composite structure 112 with the protection sheet 16, but the basic requirement for the connection function can also be met. The solution capable of replacing the multilayer jointly-welded before gripping structure further includes a non-multilayer jointly-welded pure cold mechanical clamping form, that is, the multilayer close-fitting contact structure. Under the circumstances, there is no jointly-welded connection relation established among various edge strips of the electrical connection part 41 or 42 of the electrode 4 of the capacitive element 1. Therefore, various edge strips may be separated if the clamping force applied by the clamp is not applied. There is still larger contact resistance among various edge strips of the electrical connection part 41 or 42 clamped by the clamp adapter in such non-multilayer jointly-welded pure cold mechanical clamping form even in the case of applying the clamping force. The contact resistance will lead to the temperature rise and the loss of power.

Fig. 12 shows that the welding spot 110 of the multilayer jointly-welded ultrasonic welding structure 11 takes the shape of a netted rectangle, which is a preferable solution capable of maximizing the area of the welding spot 110 amid the smaller size a of the electrode 4. Moreover, the larger the area of the welding spot 110 is, the stronger the conductivity of the welding structure becomes.

Fig. 5 shows that the multilayer jointly-welded ultrasonic welding structure 11 may be bent toward the direction of the thickness H of the capacitive element 1. It is obvious that this bent structure may further reduce the length size of the core 10, which is beneficial to improving the insulation and isolation effects between the core 10 and the major insulation 70. Compared with the existing cold welding or cold mechanical clamping mode, the multilayer jointly-welded ultrasonic welding structure 11 according to the present invention cannot only realize the above bending, but also can be very convenient to realize the bending process.

The manufacturing method of the power capacitor is described with reference to Fig. 1 to Fig. 14 hereinafter. The manufacturing method includes the following process steps.
In step I, a plurality of capacitive elements 1 with the same specification are manufactured, wherein each capacitive element 1 is wound by two aluminum foils 2 and two sets of thin films 3, two electrodes 4 are extended from the edges of two sides of each capacitive element 1 respectively, and the size a of each electrode 4 is 10mm to 15mm. (See Fig. 8 to Fig. 10);
In step II: ultrasonic welding is performed for the electrodes 4 of the reserved number of the plurality of capacitive elements 1 in a stress-free state through an ultrasonic welding device successively to realize the electrical connection between the electrodes 4 of each capacitive element 1, and the plurality of capacitive elements 1 are overlapped and assembled together to form a plurality of welding components 13, 14, 15 respectively, a first batch of multilayer jointly-welded ultrasonic welding structures 11 is established on each welding component through the ultrasonic welding device to establish a fixed connection relation among various capacitive elements 1 in the same welding component, and the electrical connection is realized between the electrodes 4 of various capacitive elements 1 in the same welding component at the same time. (See Fig. 6 to Fig. 7)
In step III, various welding components 13, 14, 15 are fixedly connected and then pressed and assembled as a core 10 according to design requirements. (See Fig. 4)
In step IV, the ultrasonic welding is performed for the pressed core 10 through an ultrasonic welding tool, and a second batch of multilayer jointly-welded ultrasonic welding structures 11 is established among various welding components 13, 14, 15 formed as the core 10 to achieve the electrical connection among each adjacently overlapped and assembled welding components 13, 14, 15 and meet the series-parallel connection among various welding components 13, 14, 15 as required for the core 10. (See Fig. 4, Fig. 6, Fig. 7, Fig. 11 and Fig. 12)
In step V, a before gripping structure is firstly established for the electrode 4 lead out from the outermost side of the welding components 13 and 15 at the upper end and the lower end of the core 10 respectively, and then a wiring clamp 7 on the terminals 71 and 72 of the capacitor is clamped with the before gripping structure through a hand-held mechanical clamping tool respectively, the clamping connection includes the clamping connection between the wiring clamp 7 and the multilayer jointly-welded ultrasonic welding structure 11, a cold mechanical clamping structure 12 at each terminal of the capacitor is formed, which meets the whole capacity function of the core 10. (See Fig. 4, Fig. 6, Fig. 7, Fig. 13 and Fig. 14)
The step V further includes a sub-step of bending and arranging the ultrasonic multilayer jointly-welded ultrasonic welding structures 11 and the cold welding structure 12, fixedly installing the bent and arranged core 10 in the major insulation 70 (see Fig. 5), and then installing the major insulation 70 and the core 10 in the housing (without being shown in the figure).

The ultrasonic welding device may be an universal ultrasonic welding machine, or a production line which takes the universal ultrasonic welding machine as a main body. The ultrasonic welding tool may be the ultrasonic welding tool that is prone to realizing the ultrasonic welding operation after assembling as the core. The hand-held mechanical clamping tool is a number of public tools, which are matched with the cold mechanical clamping structure 12.

## Claims

1. A power capacitor, comprising a core (10) installed in major insulation (70) and at least two terminals (71, 72) connected with an external circuit, wherein:
the core (10) comprises a plurality of welding components (13, 14, 15) mutually overlapped together, each of welding components (13, 14, 15) comprises a plurality of capacitive elements (1), each capacitive element (1) is wound by two aluminum foils (2) and two sets of thin films (3), two aluminum foils (2) of each capacitive element (1) are provided with two electrodes (4) extending in opposite directions respectively from the edges of the thin film (3), and the size a of each electrode (4) is 10mm to 15mm;
various capacitive elements (1) inside each of welding components (13, 14, 15) are electrically connected through a first batch of multilayer jointly-welded ultrasonic welding structures (11), various welding components (13, 14, 15) are electrically connected through a second batch of multilayer jointly-welded ultrasonic welding structures (11), two welding components (13 , 15) located at the upper end and the lower end of the core (10) are electrically connected with the terminal (71 or 72) through a cold mechanical clamping structure (12) respectively.

2. The power capacitor according to claim 1, wherein the multilayer jointly-welded ultrasonic welding structures (11) are jointly-welded double-pole full-layer composite structures (111) with a protection sheet (16) or jointly-welded double-pole full-layer simple structures without a protection sheet, and the setting portion of the jointly-welded double-pole full-layer composite structures (111) or the jointly-welded double-pole full-layer simple structures is on two adjacent electrical connection parts (41, 42) of two adjacent electrodes (4) of two adjacent capacitive elements (1).

3. The power capacitor according to claim 1, wherein the multilayer jointly-welded ultrasonic welding structures (11) are jointly-welded single-pole full-layer composite structures (112) with a protection sheet (16) or jointly-welded single-pole full-layer simple structures without a protection sheet, and the setting portion of the jointly-welded single-pole full-layer composite structures (112) or the jointly-welded single-pole full-layer simple structures is on one of two electrical connection parts (41 , 42) of the same electrode (4) of the same capacitive element (1).

4. The power capacitor according to claim 1, wherein:
the cold mechanical clamping structure (12) comprises a before gripping structure and a jointing clamp (7), the before gripping structure is established on the connection parts (41, 42) of the electrode (4) for leading out the electrical connection in two welding components (13, 15) at the upper end and the lower end of the core (10), the jointing clamp (7) is arranged on the terminal (71 or 72), and the jointing clamp (7) and the before gripping structure are subject to cold mechanical clamping.

5. The power capacitor according to claim 4, wherein:
The before gripping structure is a multilayer close-fitting contact structure established on the connection part (41 or 42) of the electrode (4); or
the before gripping structure is a multilayer jointly-welded ultrasonic welding structure established on the connection part (41 or 42) of the electrode (4).

6. The power capacitor according to claim 1, wherein the size a of the electrode (4) is preferably 12mm.

7. The power capacitor according to any one of claims 1 to 3, wherein welding spots (110) of the multilayer jointly-welded ultrasonic welding structures (11) take the shape of a netted rectangle.

8. The power capacitor according to any one of claims 1 to 3, wherein the multilayer jointly-welded ultrasonic welding structures (11) are bent toward the direction of the thickness H of the capacitive element 1.

9. A manufacturing method of a power capacitor, comprising the following steps of:
step I: manufacturing a plurality of capacitive elements (1) with the same specifications, wherein each capacitive element (1) is wound by two aluminum foils (2) and two sets of thin films (3), and two electrodes (4) are extended from the edges of two sides of each capacitive element (1) respectively, and the size a of each electrode (4) is 10mm to 15mm;
step II: performing ultrasonic welding for the electrodes (4) of pre-set number of the plurality of capacitive elements 1 in a stress-free state through using an ultrasonic welding device successively to realize the electrical connection between the electrodes (4) of each capacitive element (1), and overlapping and assembling the plurality of capacitive elements (1) together to form a plurality of welding components (13, 14, 15) respectively, establishing a first batch of multilayer jointly-welded ultrasonic welding structures (11) on each welding component through the ultrasonic welding device to establish a fixed connection relation among various capacitive elements (1) in the same welding component, and realizing the electrical connection between the electrodes (4) of various capacitive elements (1) in the same welding component at the same time;
step III: fixedly connecting among various welding components (13, 14, 15) and then pressing and assembling as a core (10);
step IV: performing the ultrasonic welding for the pressing assembled core (10) through an ultrasonic welding tool, and establishing a second batch of multilayer jointly-welded ultrasonic welding structures (11) among various welding components (13, 14, 15) formed as the core (10) to achieve the electrical connection among each adjacently overlapped and assembled welding components (13, 14, 15); and
step V: firstly establishing a before gripping structure for the electrode (4) lead out from the outermost side of the welding components (13, 15) at the upper end and the lower end of the core (10) respectively, and then clamping a wiring clamp (7) on the terminals (71 and 72) of the capacitor and the before gripping structure through a hand-held mechanical clamping tool respectively to form a cold mechanical clamping structure (12) at each terminal of the capacitor.

10. The manufacturing method of the power capacitor according to claim 9, wherein the step V further comprises a sub-step of bending and arranging the ultrasonic multilayer jointly-welded ultrasonic welding structures (11) and the cold welding structure (12), and fixedly installing the core (10) in the major insulation (70).
